# EUROPÄISCHE PATENTSCHRIFT

(11) **EP 0 789 161 B1**
(45) Veröffentlichungstag und Bekanntmachung des Hinweises auf die Patenterteilung: **01.03.2000**
(21) Anmeldenummer: 96117753.2
(22) Anmeldetag: 06.11.1996
(51) Int. Cl.: F16F 15/123, F16F 15/131, F16F 15/12

(54) **Schwungmassenvorrichtung mit einer Entkopplungsvorrichtung**
Double mass flywheel decoupling device
Amortisseur rotatif avec dispositif à découplage

(30) Priorität: 10.02.1996 DE 19604964
(43) Veröffentlichungstag der Anmeldung: 13.08.1997
(73) Patentinhaber: Mannesmann Sachs Aktiengesellschaft, 97424 Schweinfurt (DE)
(72) Erfinder: Sudau, Jörg, Dipl.-Ing., 97464 Niederwerrn (DE)

(56) Entgegenhaltungen:
- WO-A-96/00859
- DE-A- 3 440 927
- FR-A- 2 658 880
- FR-A- 2 702 261

## Beschreibung

Die Erfindung betrifft eine Schwungmassenvorrichtung gemäß dem Oberbegriff des Anspruchs 1. Eine derartige Vorrichtung ist aus der DE 34 11 090 A1 bekannt, bei der die erste der Schwungmassen nach Verbindung mit einem Antrieb um eine Drehachse rotierend antreibbar und die zweite Schwungmasse relativ zur ersten entgegen der Wirkung eines Torsionsschwingungsdämpfers wenigstens um einen begrenzten Drehwinkel auslenkbar ist. Die erste Schwungmasse ist über eine erste Lagerung und die zweite Schwungmasse über eine zweite Lagerung mit einer Abtriebswelle in Form der Getriebeeingangswelle eines Kraftfahrzeugs verbunden.

Für den Fall, das es sich bei dem vorgenannten Antrieb um eine Brennkraftmaschine mit einer Kurbelwelle handelt, besteht das Problem, daß nicht nur Torsionsschwingungen auf die an dem freien Ende der Kurbelwelle befestigte erste Schwungmasse übertragen werden, sondern auch Biegebewegungen der Kurbelwelle, die an der ersten Schwungmasse entsprechende Taumelbewegungen auslösen. Bei Lagerung der Abtriebswelle an der Kurbelwelle und/oder der an dieser befestigten ersten Schwungmasse werden die Biege/Taumelbewegungen unter Umgehung der Schwungmassenvorrichtung direkt auf die Abtriebswelle übertragen, was sich insbesondere in akustisch wahrnehmbaren Störschwingungen im Getriebe äußert.

Der Erfindung liegt die Aufgabe zugrunde, eine gattungsgemäße Schwungmassenvorrichtung so weiterzubilden, daß Biegebewegungen der Kurbelwelle eines Antriebs keine Störschwingungen im Getriebe verursachen können.

Diese Aufgabe wird erfindungsgemäß durch die im Kennzeichen des Anspruchs 1 angegebenen Merkmal gelöst.

Durch Anordnung einer Entkopplungsvorrichtung zwischen der ersten Schwungmasse und der Abtriebswelle wird bewirkt, daß von einer Kurbelwelle des durch eine Brennkraftmaschine gebildeten Antriebs keine Biegebewegungen mehr direkt auf die Abtriebswelle leitbar sind, sondern vielmehr, nachdem sie eine Taumelbewegung an der ersten Schwungmasse erzeugt haben, von der letztgenannten auf die zweite Schwungmasse übertragen werden, welche infolge der bei Drehung wirksamen Kreiselkräfte selbststabilisierend ist, so daß an der Verbindungsstelle zwischen den beiden Schwungmassen, welche vorzugsgemäß durch ein Lagerelement der Entkopplungsvorrichtung gebildet wird, der weitaus überwiegende Teil der Taumelbewegungen ausgefiltert ist. Nachdem zwischen den beiden Schwungmassen über den Torsionsschwingungsdämpfer in bekannter Weise auch Torsionsschwingungen abgebaut werden, wird folglich die Abtriebswelle nur mit vernachlässigbar geringen Störschwingungen belastet. Voraussetzung hierbei ist allerdings, daß zwischen dem Antrieb und der Abtriebswelle keine Direktverbindung besteht, sondern eine Verbindung einzig und allein über die Entkopplungsvorrichtung erfolgt. Daher wird, im Vergleich zur Schwungmassenvorrichtung gemäß der eingangs gewürdigten DE 34 11 090 A1, auf eine Lagerung der Abtriebswelle an der Kurbelwelle oder der ersten Schwungmasse verzichtet. Statt dessen besteht die einzige Verbindung zwischen dem Antrieb bzw. der ersten Schwungmasse und der Abtriebswelle über die anspruchsgemäße Entkopplungsvorrichtung. Diese kann anspruchsgemäß ein Lagerelement aufweisen, durch welches die beiden Schwungmassen zueinander zentriert sind, wobei das Lagerelement der Entkopplungsvorrichtung mit radialem Abstand zur Lagerung zwischen der zweiten Schwungmasse und der Abtriebswelle angeordnet ist.

Der radiale Unterschied zwischen Lagerelement und Lagerung sollte anspruchsgemäß vorzugsweise derart gewählt werden, daß eines der beiden Bauteile das jeweils andere radial umschließt. Günstig im Hinblick auf eingeleitete Biege/Taumelbewegungen hat es sich hierbei erwiesen, wenn insbesondere das Lagerelement der Entkopplungsvorrichtung, aber auch die Lagerung selbst möglichst weit in Richtung zum Antrieb verlagert sind.

Eine vorteilhafte Weiterbildung des Lagerelementes kann beispielsweise darin liegen, dieses als Wälzlager auszubilden. Allein schon durch diese Maßnahme läßt sich ausreichend Spiel einbringen, um die benötigte Bewegbarkeit der beiden Schwungmassen relativ zur Drehachse auf einfachste Weise zu gewährleisten.

Im folgenden wird ein Ausführungsbeispiel der Erfindung anhand einer Zeichnung näher erläutert. Es zeigt:

Eine Schwungmassenvorrichtung mit zwei relativ zueinander drehbaren Schwungmassen, von denen eine auf einer Abtriebswelle zentriert ist.

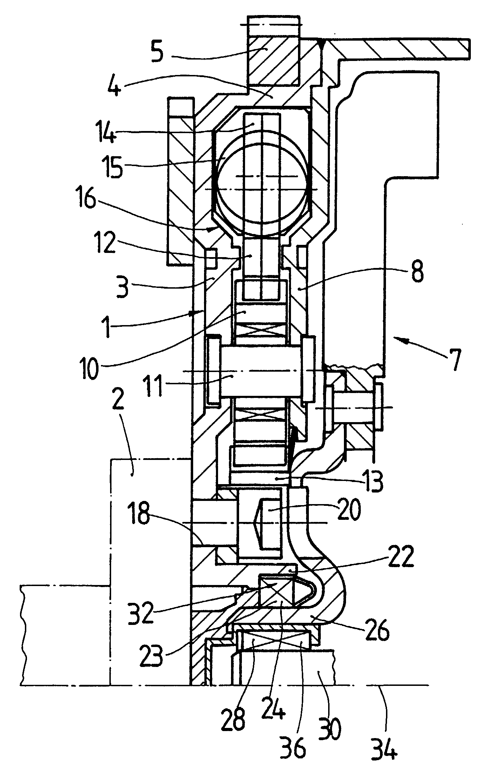

Die in der Figur dargestellte Schwungradvorrichtung weist an ihrer linken Seite, mit welcher sie an einem Antrieb 2, wie beispielsweise dem freien Ende der Kurbelwelle einer Brennkraftmaschine, befestigt wird, eine im wesentlichen nach radial außen laufende Primärplatte 3 auf, die im Umfangsbereich auf einem Axialring 4 mit einem Zahnkranz 5 für ein nicht gezeigtes Starterritzel versehen ist. Der Axialring 4 ist an seinem einer zweiten Schwungmasse 7 zugewandten Ende mit einer nach radial innen greifenden Wand 8 verbunden, die ebenso wie die Primärplatte 3 als Planetenträger wirksam ist für Planetenräder 10 eines Planetengetriebes , die über eine Lagerstelle 11 gelagert sind und einerends mit einem Hohlrad 12, anderenends dagegen mit einem Sonnenrad 13 des Planetengetriebes in Verzahnungseingriff stehen. Das Hohlrad 12 ist über radial vorstehende Finger 14 mit Kraftspeichern 15 einer Torsionsdämpfungseinrichtung 16 in Eingriff, wobei sich die Kraftspeicher 15 in nicht gezeigter Weise an der Primärplatte sowie an der Wand 8 der ersten Schwungmasse 1 abstützen. Das Sonnenrad 13 ist dagegen in nicht näher gezeigter Weise mit der zweiten Schwungmasse 7 fest verbunden.

Im radial inneren Bereich der Primärplatte 3 sind Öffnungen 18 zum Durchgang von Schrauben 20 vorgesehen, durch welche die Anbindung der ersten Schwungmasse 1 an den Antrieb 2 erfolgen soll. Radial innerhalb der Schrauben 20 weist die Primärplatte 3 einen in Richtung zur zweiten Schwungmasse 7 ragenden Axialansatz 22 auf, in welchem ein Lagerelement 23 in Form eines Wälzlagers 24 axial gesichert aufgenommen ist. Dieses Lagerelement greift radial innen , ebenfalls axial gesichert, an einem Axialvorsprung 26 der zweiten Schwungmasse 7 an, wobei der letztgenannte Axialvorsprung in Richtung zur ersten Schwungmasse 1 verläuft. Über den Axialvorsprung 26 nimmt die zweite Schwungmasse 7 an der radialen Innenseite dieses Vorsprungs eine Lagerung 28 auf, die ihrerseits radial innen auf einer Abtriebswelle 30 aufsitzt. Die letztgenannte Welle kann bei Kraftfahrzeugen durch die Getriebeeingangswelle gebildet werden.

Das zuvor genannte Lagerelement 23 ist als Entkopplungsvorrichtung 32 zwischen den beiden Schwungmassen 1 und 7 und damit zwischen dem mit der ersten Schwungmasse 1 festverbundenen Antrieb 2 und der über die Lagerung 28 an der zweiten Schwungmasse 7 aufgenommenen Abtriebswelle 30 wirksam.

Die Funktionsweise der Schwungmassenvorrichtung ist wie folgt: Vom Antrieb eingeleitete Torsionsschwingungen werden in bekannter Weise, wie beispielsweise in der DE-GM Schrift 94 14 314, beschrieben, durch den Torsionsschwingungsdämpfer 16 ausgefiltert. Dagegen führen Biegeschwingungen, die von der Kurbelwelle einer Brennkraftmaschine als Antrieb 2 abgegeben werden, an der ersten Schwungmasse 1 zu Taumelbewegungen und einer radialen Verschiebung, die sich über den Axialvorsprung 22 der Primärplatte 3 an der radialen Außenseite des Lagerelementes 23 auswirken. Die Übertragung der radialen Verschiebung infolge der Biegeschwingungen kann insbesondere durch die axiale Positionierung des Lagerelementes 23 in unmittelbarer Nähe des benachbarten letzten Kurbelwellenlagers vollständig unterbunden werden.

Die Taumelbewegung wirkt sich auf folgende Weise aus: Für den Fall, daß das Lagerelement 23 durch ein Wälzlager 24 gebildet ist, wird der Außenring gegenüber dem Innenring schräg gestellt, und zwar maximal soweit, wie es die Wälzkörper zwischen diesen beiden Ringen zulassen. Für den Fall des Einsatzes eines Lagerelementes 23 in Form eines Gleitlagers erfährt dieses eine elastische Verformung, so daß es ebenfalls zu einem Winkelversatz der ansonsten im wesentlichen konzentrisch zueinander verlaufenden Axialvorsprünge 22 und 26 der beiden Schwungmassen 1 und 7 kommt, wenn ein vorhandenes Spiel nicht die gleiche Funktion wie beim Wälzlager übernimmt. Dieser Beeinflussung des Lagerelementes 23 wirkt allerdings entgegen, daß beide Schwungmassen 1 und 7 infolge ihrer Drehbewegung eine Stabilisierung in Achsrichtung erfahren, die Taumelbewegungen also abgebaut werden. Als Folge hiervon liegen an der radialen Innenseite des Lagerelementes 23 lediglich geringe Kräfte an, die eine Winkelauslenkung des Axialvorsprungs 26 der zweiten Schwungmasse 7 gegenüber der Drehachse 34 der Schwungradvorrichtung bewirken könnten. Diese kleinen Resttaumelbewegungen können, sofern die Lagerung 28 zwischen dem Axialvorsprung 26 und der Abtriebswelle 30 durch ein Wälzlager 36 oder Gleitlager mit entsprechendem Lagerspiel gebildet wird, ebenfalls noch ausgefiltert werden. Es gelangen demnach keine Störschwingungen aufgrund von Taumelbewegungen auf die Abtriebswelle 30 und damit in das Getriebe des Fahrzeugs. Folglich ist, wie bereits angedeutet, das Lagerelement 23 als Teil einer Entkopplungsvorrichtung 32 wirksam.

## Patentansprüche

1. Schwungmassenvorrichtung mit einer mit einem Antrieb verbindbaren, um eine Drehachse rotierend antreibbaren ersten Schwungmasse und einer relativ zu dieser entgegen der Wirkung eines Torsionsschwingungsdämpfers wenigstens um einen begrenzten Drehwinkel auslenkbaren zweiten Schwungmasse, die über eine Lagerung mit einer Abtriebswelle in Wirkverbindung steht,
dadurch gekennzeichnet,
daß der Antrieb (2) und/oder die erste Schwungmasse (1) allein über eine Entkopplungsvorrichtung (32), welche einen Winkelversatz der Schwungmassen (1,7) zueinander relativ zur Drehachse (34) zuläßt, mit der Abtriebswelle (30) verbunden ist.

2. Schwungmassenvorrichtung nach Anspruch 1,
dadurch gekennzeichnet,
daß die zweite Schwungmasse (7) über ein den Winkelversatz zwischen den Schwungmassen (1,7) relativ zur Drehachse (34) zulassendes, als Teil der Entkopplungsvorrichtung (32) wirksames Lagerelement (23) an der ersten Schwungmasse (1) zentriert ist, wobei das Lagerelement (23) gegenüber der Lagerung (28) zwischen zweiter Schwungmasse (7) und Abtriebswelle (30) mit radialem Abstand angeordnet ist.

3. Schwungmassenvorrichtung nach Anspruch 1 und 2,
dadurch gekennzeichnet,
daß das Lagerelement (23) radial außerhalb der Lagerung (28) angeordnet ist und, in Achsrichtung gesehen, beide Bauteile (23,28) so dicht als möglich an den Antrieb (2) der ersten Schwungmasse (1)angenähert sind.

4. Schwungmassenvorrichtung nach Anspruch 1,2 oder 3,
dadurch gekennzeichnet,
daß das Lagerelement (23) als Wälzlager (24) ausgebildet ist.

## Claims

1. Flywheel-mass device with a first flywheel mass, which can be connected to a drive and can be driven in rotation about an axis of rotation, and with a second flywheel mass, which can be deflected at least by a limited angle of rotation relative to the first flywheel mass against the action of a torsional vibration damper and is in operative connection via a bearing arrangement with an output shaft, characterized in that the drive (2) and/or the first flywheel mass (1) are/is connected to the output shaft (30) solely via a decoupling device (32) which permits a mutual angular offset of the flywheel masses (1, 7) relative to the axis of rotation (34).

2. Flywheel-mass device according to Claim 1, characterized in that the second flywheel mass (7) is centred on the first flywheel mass (1) by means of a bearing element (23) which permits the angular offset between the flywheel masses (1, 7) relative to the axis of rotation (34) and acts as part of the decoupling device (32), the bearing element (23) being arranged at a radial distance from the bearing arrangement (28) between the second flywheel mass (7) and the output shaft (30).

3. Flywheel-mass device according to Claim 1 and 2, characterized in that the bearing element (23) is arranged radially to the outside of the bearing arrangement (28) and, as seen in the axial direction, both components (23, 28) are placed as close as possible to the drive (2) of the first flywheel mass (1).

4. Flywheel-mass device according to Claim 1, 2 or 3, characterized in that the bearing element (23) is designed as a rolling-contact bearing (24).

## Revendications

1. Dispositif à masse d'inertie avec une première masse d'inertie pouvant être reliée à un entraînement, et susceptible d'être entraînée en rotation autour d'un axe de rotation et une deuxième masse d'inertie susceptible d'être déviée par rapport à celle-ci à l'encontre de l'effet d'un amortisseur de vibrations torsionnelles au moins d'un angle de rotation limité, laquelle deuxième masse d'inertie est en liaison coopérante avec un arbre mené par le biais d'un logement de palier, caractérisé en ce que l'entraînement (2) et/ou la première masse d'inertie (1) seul(e) est reliée(e) à l'arbre mené (30) par le biais d'un dispositif de découplage (32), qui autorise un déport angulaire des masses d'inertie (1, 7) l'une par rapport à l'autre par rapport à l'axe de rotation (34).

2. Dispositif à masse d'inertie selon la revendication 1, caractérisé en ce que la deuxième masse d'inertie (7) est centrée sur la première masse d'inertie (1) par l'intermédiaire d'un élément de palier (23) agissant en tant que partie du dispositif de découplage (32) et autorisant le déport angulaire entre les masses d'inertie (1, 7) par rapport à l'axe de rotation (34), l'élément de palier (23) étant disposé par rapport au logement de palier (28) avec un écart radial entre la deuxième masse d'inertie (7) et l'arbre mené (30).

3. Dispositif à masse d'inertie selon les revendications 1 et 2, caractérisé en ce que l'élément de palier (23) est disposé radialement à l'extérieur du logement de palier (28), et vu dans la direction axiale, les deux composants (23, 28) sont rapprochés aussi près que possible de l'entraînement (2) de la première masse d'inertie (1).

4. Dispositif à masse d'inertie selon la revendication 1, 2 ou 3, caractérisé en ce que l'élément de palier (23) est conçu en tant que palier à roulement (24).
